# EUROPEAN PATENT SPECIFICATION

(11) **EP 3 543 685 B1**
(45) Date of publication and mention of the grant of the patent: **01.01.2025**
(21) Application number: 16921554.8
(22) Date of filing: 18.11.2016
(51) Int. Cl.: G01N 27/26, G01N 17/02, G01N 17/00

(54) **CORROSION ASSESSMENT METHOD**
KORROSIONSBEURTEILUNGSVERFAHREN
PROCÉDÉ D'ÉVALUATION DE CORROSION

(43) Date of publication of application: 25.09.2019
(73) Proprietor: Tokyo Electric Power Company Holdings, Incorporated, Tokyo 100-8560 (JP)
(72) Inventor: TATSUOKA, Teruhisa, Tokyo 100-8560 (JP); OSADA, Masanori, Tokyo 100-8560 (JP); OHTA, Hiroshi, Tokyo 100-8560 (JP); HIDA, Tomohito, Tokyo 100-8560 (JP)
(74) Representative: EP&C
(86) International application number: PCT/JP2016/084254
(87) International publication number: WO 2018/092264

(56) References cited:
- JP-A- 2005 337 838
- JP-A- 2007 263 923
- JP-A- 2008 157 647
- JP-A- 2008 224 405
- JP-A- 2008 224 405
- JP-A- 2012 251 846
- JP-A- 2012 251 848
- TERUHISA TATSUOKA ET AL.: "Taiki Kankyo no Fushokusei Hyoka to Kohan na Fushoku Sokudo Map no Sakusei", PROCEEDINGS OF THE JAPAN CONFERENCE ON MATERIALS AND ENVIRONMENTS, vol. 60, 10 September 2013 (2013-09-10), pages 195 - 198, XP009518231
- TERUHISA TATSUOKA ET AL.: "Tetto Kokan Naigai Kankyo no Fushokusei Hyoka", PROCEEDINGS OF THE JAPAN CONFERENCE ON MATERIALS AND ENVIRONMENTS, vol. 61, 12 November 2014 (2014-11-12), pages 291 - 294, XP009518230
- TERUHISA TATSUOKA ET AL.: "Fe/Ag, Zn/Ag, Al/Ag-Tai ACM-gata Fushoku Sensor o Mochiita Soden Setsubi no Kankyo Hyoka", FUSHOKU BOSHOKU SYMPOSIUM SHIRYO, vol. 165, 2008, pages 49 - 58, XP009516534

## Description

### [Technical Field]

The present invention relates to a method of evaluating corrosion.

### [Background Art]

Power equipment is constructed using metallic materials in some cases. Such power equipment includes, for example, transformers using steel, zinc plating, aluminum, or the like, steel towers, bridges, electrical wires, and the like. A steel tower supports transmission lines and the like. Such power equipment may be provided, for example, outdoors, and may be provided over a wide area.

It is very important to evaluate a corrosion rate of a metal material from which power equipment is constructed and to maintain the power equipment appropriately and efficiently. Recently, an atmospheric environment has been monitored and a corrosion rate has been evaluated by an atmospheric corrosion monitor (ACM) sensor which can quantitatively evaluate a corrosion rate in a convenient manner within a short period of time as compared to an exposure test.

As an example, Patent Literature 1 discloses a corrosion rate evaluation method and the like which, in performing a multiple regression analysis having a corrosion rate of a metal material as an objective variable and an environmental factor and a topography factor that affect the corrosion rate as explanatory variables, include at least a virtual wetting time weighted according to the relative humidity as one of explanatory variables, obtain a corrosion rate estimation formula using a multiple regression analysis method based on a measured corrosion rate of a metal material, and obtain a corrosion rate of the metal material in a non-measurement area by estimating it on the basis of an obtained corrosion rate estimation formula (refer to claims 1 and the like of Patent Literature 1).

As another example, Patent Literature 2 discloses a corrosion rate estimation method for a structure using an ACM sensor, which has a process (1) of obtaining the amount of electricity on the basis of time-lapse output current data of a reference ACM sensor installed for a fixed period of time so that time-lapse data of an output current can be measured on a surface portion of an actual structure, a process (2) of placing an evaluation ACM sensor installed for a fixed period of time while allowing conduction between an anode and a cathode on the surface of the real structure under constant-temperature and constant-humidity conditions along with the reference ACM sensor, and measuring each output current, a process (3) of obtaining the amount of electricity of the evaluation ACM sensor on the basis of a relationship between the output current of the reference ACM sensor and the output current of the evaluation ACM sensor in the process (2) and the amount of electricity of the reference ACM sensor, and a process (4) of obtaining an estimated corrosion rate of the real structure on the basis of a relationship between the amount of electricity of the evaluation ACM sensor obtained in the process (3), and the amount of electricity and a corrosion rate set in advance (refer to claims 1 and the like of Patent Literature 2). As a result, corrosiveness of a structure at a predetermined point is, for example, evaluated on the basis of an output current value and an exposure time of the reference ACM sensor stored in a data logger.

Patent Literature 3 discloses to estimate a corrosion rate at an arbitrary point with a high degree of accuracy. A function application part identifies an optimal parameter with a minimum error between an observed corrosion rate measured at an observational point and an estimated corrosion rate, as a parameter, by applying temperature, precipitation, and the number of dew condensation days at the observational point that are obtained by calculating a weighted average of the temperature, the precipitation, and the number of dew condensation days at a first observation point on the basis of distance between the observational point and the first observation point, a sea salt particle amount at the observational point and the observed corrosion rate to an analytical function for calculating the estimated corrosion rate at an arbitrary point. A corrosion rate estimation part calculates the corrosion rate at an estimation point, on the basis of the analytical function using the optimal parameter, from: the temperature, the precipitation, and the number of dew condensation days at the estimation point that are obtained by calculating the weighted average of the temperature, the precipitation, and the number of dew condensation days at a second observation point on the basis of the distance between the estimation point and the second observation point; and the sea salt particle amount at the estimation point.

Patent Literature 4 discloses to obtain an estimated value of a corrosion speed, etc., at an arbitrary point through extremely simple operation. A learning part previously calculates and stores a parameter used for an analysis function for analyzing the extent of metal corrosion on the basis of meteorological data obtained by making an observation at an observation point, measured data obtained by measuring the extent of metal corrosion at a measurement point, and position data on the measurement point and observation point, an analysis control part specifies an analysis point for analyzing the extent of metal corrosion through selecting operation on screen-displayed map data, and acquires the parameter used for the analysis from the learning part, and an analysis part analyzes and displays the extent of metal corrosion at the analysis point on a screen on the basis of the meteorological data observed at the observation point at the periphery of the analysis point, the position data on the analysis point and observation point, and the analysis function using the parameter.

Patent Literature 5 discloses to provide a method for diagnosing deterioration due to corrosion of a wiring fitting for power transmission capable of grasping a highly precise corrosion situation with little sampling data. When determining a prediction formula for estimating the corrosion situation of the wiring fitting from the sampling data, an altitude, a seashore distance and a wet time are used as influence factors. The wet time is a continuation time of state with the humidity of 80% or higher and the temperature of 0°C or higher. The corrosion situation is grasped as a corrosion rate, and the remaining life of a specific wiring fitting is estimated from the corrosion rate. The estimated remaining life is displayed on a map screen where a power transmission facility is displayed.

However, when a corrosion rate of a metal material at a point (non-measurement point) on which such measurement is not performed is estimated on the basis of data obtained by measuring the corrosion rate of the metal material, accuracy of the estimation may be degraded in some cases if the non-measurement point has a special corrosive environment. That is, if measurement is performed by an ACM sensor at a point having a special corrosive environment, a singular value may be measured, which may deviate from the results of the estimation.

### [Citation List]

### [Patent Literature]

[Patent Literature 1]
   Japanese Unexamined Patent Application, First Publication No. 2008-224405
[Patent Literature 2]
   Japanese Unexamined Patent Application, First Publication No. 2008-157647
[Patent Literature 3]
   Japanese Unexamined Patent Application, First Publication No. 2012-251848
[Patent Literature 4]
   Japanese Unexamined Patent Application, First Publication No. 2012-251846
[Patent Literature 5]
   Japanese Unexamined Patent Application, First Publication No. 2007-263923

### [Summary of Invention]

### [Technical Problem]

An object of the present invention is to provide a method of evaluating corrosion which can perform evaluation of corrosion with good accuracy, in estimating information on corrosion of a metal material at a point (non-measurement point) on which such measurement is not performed, even when the non-measurement point has a special corrosive environment.

### [Solution to Problem]

According to one aspect, a method of evaluating corrosion in which evaluation for corrosion is performed on the basis of a result of measurement performed on the corrosion of a metal material according to claim 1 is provided.

In the aspect, in the method of evaluating corrosion, the evaluation for corrosion is performed on an area including the first measurement points, the second measurement points, and the estimation point on the basis of the first measurement result, the second measurement results, and the estimation result.

### [Advantageous Effects of Invention]

According to an evaluation method of corrosion, it is possible to evaluate corrosion with high accuracy.

### [Brief Description of Drawings]

FIG 1 is a view (front view) which shows a schematic configuration of an ACM sensor according to an embodiment of the present invention.
FIG 2 is a view (A-A cross-sectional view) which shows a schematic configuration of the ACM sensor according to the embodiment of the present invention.
FIG 3 is a view which shows a schematic configuration of an attachment of an ACM sensor according to the embodiment of the present invention.
FIG 4 is a diagram which shows an example of a flow of processing for estimating corrosion rate data at a non-measurement point from corrosion rate data at a measurement point according to the embodiment of the present invention.
FIG 5 is a diagram which shows an example of a flow of processing for estimating a corrosion rate in accordance with a measurement result of an evaluation ACM sensor from a measurement result of a reference ACM sensor according to the embodiment of the present invention.

### [Description of Embodiments]

In the drawings used for the following description of the embodiments, for convenience of description, there are parts in which a size of each component or a size ratio between a plurality of components is different from actual ones.

### [ACM sensor]

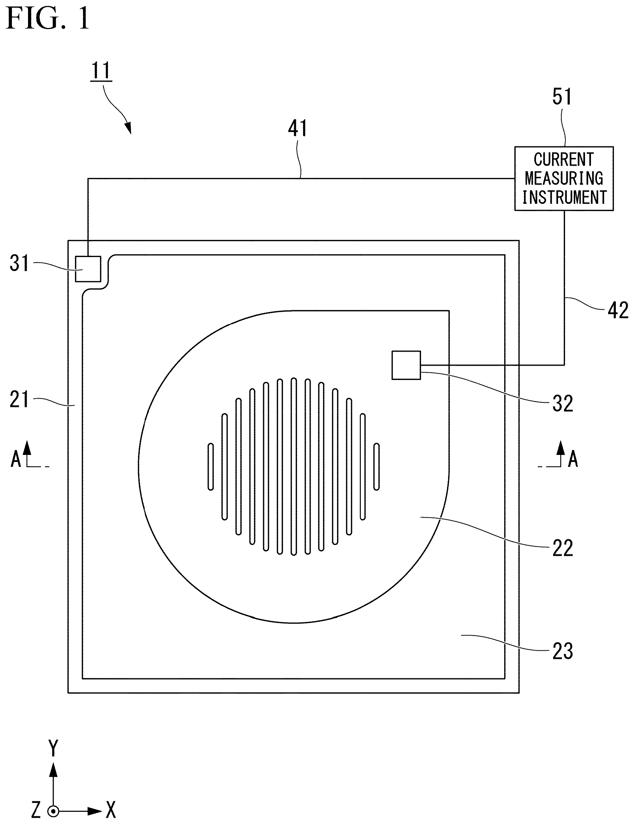

FIG 1 is a view (front view) which shows a schematic configuration of an ACM sensor 11.

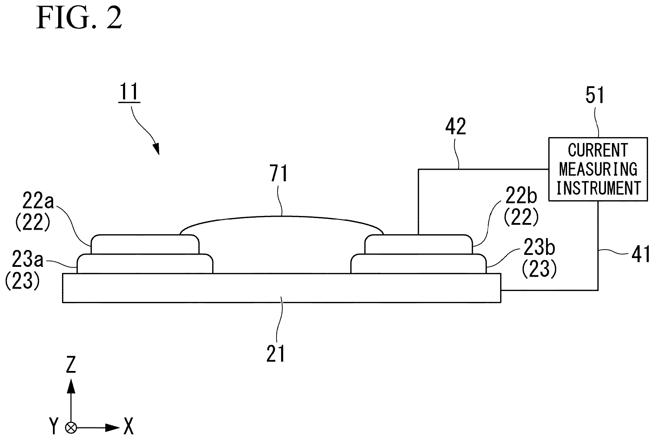

FIG 2 is a view (A-A cross-sectional view) which shows a schematic configuration of the ACM sensor 11.

FIG 2 is an A-A cross-sectional view with respect to (the front view) of FIG 1.

FIGS. 1 and 2 show an XYZ orthogonal coordinate system for convenience of description.

The ACM sensor 11 can measure a corrosion rate of a metal material as information on corrosion of the metal material.

In general, in the ACM sensor 11, two dissimilar metals are embedded in a resin in a mutually isolated state, both ends are exposed to an environment, and a corrosion current that flows when a water film is connected between the two metals is measured to measure a corrosion rate of a metal. The ACM sensor 11 is used, for example, to quantitatively evaluate the corrosiveness of an atmospheric environment.

The ACM sensor 11 includes a steel substrate 21, a conductive member 22, an insulating member 23, conductors 41 and 42, and a current measuring instrument 51.

The insulating member 23 and the conductive member 22 are laminated on a surface of the steel substrate 21.

One end of the conductor 41 is connected to a predetermined place (a connecting place 31) provided in the steel substrate 21, and one end of the conductor 42 is connected to a predetermined place (a connecting place 32) provided in the conductive member 22. The other end of the conductor 41 and the other end of the conductor 42 are connected to the current measuring instrument 51.

Note that the conductive members 22 shown in FIG 1 are shown as conductive members 22a and 22b, and the insulating members 23 shown in FIG 1 are shown as insulating members 23a and 23b in FIG 2.

In addition, a water film 71 is shown in an example of FIG 2.

Moreover, the steel substrate 21 is made of, for example, iron (Fe), and the conductive member 22 is made of, for example, silver (Ag).

Here, when an environment at a position (point) at which the ACM sensor 11 is installed is dry and nothing is deposited on a surface of the ACM sensor 11, the insulating member 23 insulates the steel substrate 21 from the conductive member 22. At this time, no potential is generated between the steel substrate 21 and conductive member 22, and a current is not measured by the current measuring instrument 51.

On the other hand, the water film 71 may be formed by rain or dew at a portion in which the steel substrate 21 and the conductive member 22 are insulated from each other and disposed on the surface of the ACM sensor 11 (in this example, the surface shown in FIG 1). At this time, the steel substrate 21 and the conductive member 22 are electrically connected by the water film 71, a potential difference occurs between these metals, and a current (galvanic current) is generated by the potential difference. Generally, since there is a correlation to the amount of corrosion of a steel material or a zinc material, it is possible to measure the Galvanic current using the current measuring instrument 51, and to quantitatively evaluate a corrosion rate.

Note that factors that affect the corrosiveness of metals include, for example, temperature, humidity, rainfall, airborne sea salt, corrosive gases (Sox), or the like. The ACM sensor 11 can directly measure a corrosion current of steel electrochemically generated due to these complicated environmental factors. For this reason, it is possible to directly and quantitatively evaluate the corrosiveness of an environment by analyzing an output current value of the ACM sensor 11.

### [Attachment of ACM sensor]

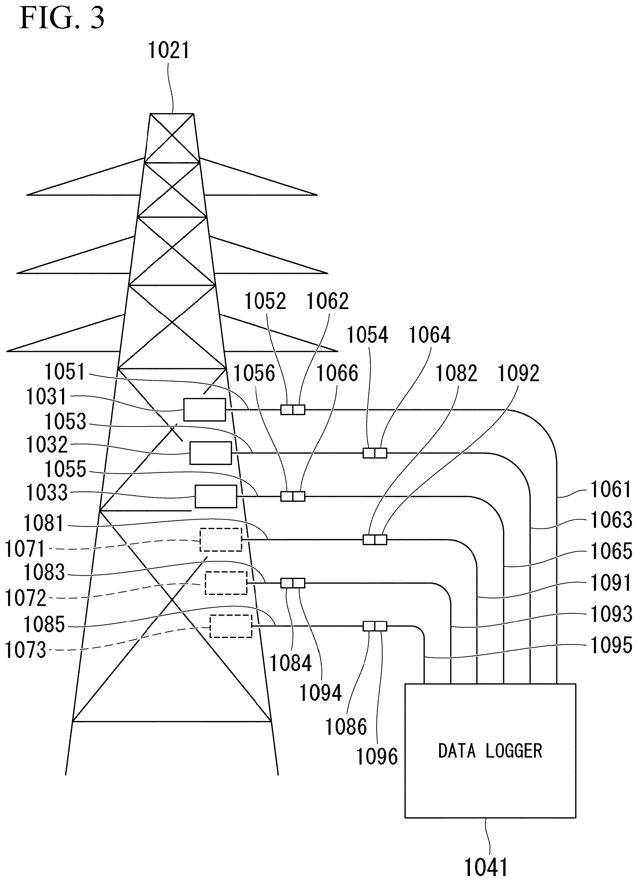

FIG 3 is a view which shows a schematic configuration of an attachment of an ACM sensor 11. In the example of FIG 3, six ACM sensors 1031 to 1033 and 1071 to 1073 (examples of the ACM sensor 11, respectively) are attached to a steel tower 1021. Note that the respective ACM sensors 1031 to 1033 and 1071 to 1073 are attached together to a temperature and humidity sensor (not shown) in the present embodiment.

In addition, an ACM sensor 1031 using aluminum (Al), an ACM sensor 1032 using zinc (Zn), and an ACM sensor 1033 using iron (Fe) are provided in order from the high side to the low side of the steel tower 1021 on the outside of the steel tower 1021. As a result, for example, it is possible to reduce (for example, minimize) effects of attachment to the lower ACM sensor after corrosion products drop out of the upper ACM sensor, and good sensitivity of the sensors can be achieved.

Moreover, an ACM sensor 1071 using aluminum (Al), an ACM sensor 1072 using zinc (Zn), and an ACM sensor 1073 using iron (Fe) are provided in order from the high side to the low side of the steel tower 1021 in the inside of the steel tower 1021. As a result, for example, it is possible to reduce (for example, minimize) effects of attachment to the lower ACM sensor after corrosion products drop out of the upper ACM sensor, and good sensitivity of the sensors can be achieved.

Note that the ACM sensors 1031 to 1033 provided on the outside of the steel tower 1021, and the ACM sensors 1071 to 1073 provided in the inside of the steel tower 1021 are in independent environments, respectively, and a disposition relationship between the ACM sensors 1031 to 1033 on the outside of the steel tower 1021 and the ACM sensors 1071 to 1073 on the inside of the steel tower 1021 is arbitrary. For example, three ACM sensors (one set) on any side may be provided at higher positions than three ACM sensors (one set) on the other side among the ACM sensors 1031 to 1033 on the outside of the steel tower 1021 and the ACM sensors 1071 to 1073 on the inside of the steel tower 1021, or the ACM sensors 1031 to 1033 on the outside of the steel tower 1021 and the ACM sensors 1071 to 1073 on the inside of the steel tower 1021 may also be disposed to be alternately arranged one at a time from the high side to the low side.

A device (a data logger 1041) for storing data is provided at or in the vicinity of the steel tower 1021.

Respective ACM sensors 1031 to 1033 and 1071 to 1073 include cables 1051, 1053, 1055, 1081, 1083, and 1085 provided with connectors 1052, 1054, 1056, 1082, 1084, and 1086.

The data logger 1041 includes cables 1061, 1063, 1065, 1091, 1093, and 1095 provided with connectors 1062, 1064, 1066, 1092, 1094, and 1096 for respective ACM sensors 1031 to 1033 and 1071 to 1073.

Then, the connectors 1052, 1054, 1056, 1082, 1084, and 1086 on sides of respective ACM sensors 1031 to 1033 and 1071 to 1073 are connected to respective connectors 1062, 1064, 1066, 1092, 1094, and 1096 on a side of the data logger 1041 in a communicative manner. As a result, respective ACM sensors 1031 to 1033 and 1071 to 1073 transmit data of a result of measuring an output current per a predetermined time to the data logger 1041, and the data logger 1041 receives and stores the data.

It is possible to evaluate corrosiveness in an atmospheric environment according to human work or device processing on the basis of data stored in the data logger 1041.

Note that, a configuration in which the ACM sensors 1031 to 1033 and 1071 to 1073 are provided at a high place on the steel tower 1021 is shown in the example of FIG 3, but the ACM sensors 1031 to 1033 and 1071 to 1073 may be provided at a leg portion or the like of the steel tower 1021 as another configuration example.

In addition, an ACM sensor may also be provided in power equipment other than the steel tower 1021.

In addition, since the ACM sensors 1031 to 1033 and 1071 to 1073 corrode and deteriorate due to exposure, it is preferable that periodical exchange be performed to acquire appropriate data. As an example, exchange of the ACM sensors 1031 to 1033 and 1071 to 1073 and exchange of a battery of the data logger 1041 may be performed at predetermined intervals, and thereby the data stored in the data logger 1041 may be collected. Examination or the like of an attachment object may be performed by the collected ACM sensors 1031 to 1033 and 1071 to 1073.

Moreover, a configuration in which one common data logger 1041 is provided for six ACM sensors 1031 to 1033 and 1071 to 1073 in the example of FIG 3, but, as another configuration example, different data loggers may be provided for each of the ACM sensors 1031 to 1033 and 1071 to 1073.

In addition, a configuration in which six ACM sensors 1031 to 1033 and 1071 to 1073 are provided at one place serving as a measurement point is shown in the example of FIG 3, but the present invention is not limited thereto, and, for example, any number (one or more) of ACM sensors may also be provided at one place serving as a measurement point.

In addition, for example, a waterproof protective tape may be wound around portions of the connectors 1052, 1054, 1056, 1082, 1084, 1086, 1062, 1064, 1066, 1092, 1094, and 1096.

Moreover, in the present embodiment, it is shown that three ACM sensors (the ACM sensors 1031 to 1033, or the ACM sensors 1071 to 1073) are disposed as one set in each of the outside and the inside of the steel tower 1021, but the present invention is not limited thereto, and any number (one or more) of ACM sensors may also be provided. In addition, as a material of the ACM sensor, any material (for example, aluminum, zinc, iron, or the like) may be used. Furthermore, in a case in which a plurality of ACM sensors are disposed, when respective ACM sensors have different materials, an arbitrary order may be used as an arrangement order (disposition) of the plurality of these ACM sensors.

Note that, for example, only one of the outside and the inside of the steel tower 1021 may be provided with ACM sensors. As a specific example, in a steel tower and the like using an angle-shaped material (for example, cone-shaped) such as an L material, an ACM sensor may be provided on both the outside and the inside of the steel tower and measurement may be performed.

### [Processing for evaluation for corrosion rate]

Hereinafter, processing for evaluation for a corrosion rate will be described. Note that a procedure of processing shown below is an example, and any other processing and order may be used.

### <Processing 1: Determination of range (area) for generating corrosion rate map and the number of ACM sensors to be installed>

First, a range for generating a corrosion rate map is determined, and the number of ACM sensors 11 to be installed in the range, and the like are determined. Note that such determinations may be made, for example, on the basis of a result of an on-site examination.

In a conventional method, when a corrosion rate map is created, if an area (region) is a circle with a radius of about 10 [km], about five to eight places will be determined as a point (reference point) at which the data logger and the ACM sensor are installed, and it is necessary to perform measurement using the ACM sensor 11 at each reference point. However, in such a conventional method, there has been a heavy burden of installation of data loggers and wiring, and the like.

On the other hand, in an improved method (as an example, the method described in Patent Literature 2), for example, when a corrosion rate map of a circular area with a radius of about 10 [km] is generated, one place may be determined as a point (reference point) at which a data logger and an ACM sensor are installed, and about four to six places may be determined as a point (surrounding point) at which only an ACM sensor is installed without a data logger.

In such an improved method, it is possible to evaluate a corrosion rate by installing only an ACM sensor at a surrounding point and bringing the ACM sensor back after a predetermined period of time has elapsed.

Furthermore, when a corrosion rate map of a wider area is generated, for example, it is possible to use a method of increasing a measurement group in a case of a circular area with a radius of about 10 [km].

As a specific example, in a case of a circular area with a radius of about 20 [km], five places may be determined as a point at which a data logger and an ACM sensor are installed, and about 16 places may be determined as a point at which only an ACM sensor is installed. That is, the entire circular area with a radius of about 20 [km] may be covered with an image in which four measurement groups in the case of the circular area with a radius of about 10 [km] are installed, and a data logger and an ACM sensor are installed at a center position of a circle with a radius of about 20 [km].

### <Processing 2: Extraction of singular point in range for generating corrosion rate map>

A singular point in a range for generating a corrosion rate map is extracted (determined).

For example, in a case of generating a corrosion rate map of a wide area, it may be difficult (or practically impossible) to measure a corrosion rate for all points.

Therefore, a point to measure a corrosion rate is selected (determined) from the wide area. In this selection, it is necessary to exclude a point (singular point) having a special corrosive environment from the wide area.

Here, a special corrosive environment includes, for example, a vicinity of a river, a river crossing place, an industrial waste disposal site, or a vicinity of an incinerator, a place at which snow melting salt has been scattered on a main road, a place at which fog or sea fog occurs for a long time, and the like. Note that a condition for determining a special corrosive environment may be, for example, arbitrarily set in view of an implementation situation such as for measurement or evaluation.

As an example, a vicinity of a river or a river crossing place may be set as a special corrosion environment because there the relative humidity may be high, the frequency of rainfall may be high, or rainfall times may be long.

As another example, an industrial waste disposal site or a vicinity of an incinerator may be set as a special corrosion environment because many gas components containing chlorine or sulfur that affect corrosion are emitted there.

As still another example, a place at which snow melting salt is scattered on a main road may be set as a special corrosion environment because calcium chloride and magnesium chloride or sodium chloride that greatly affect corrosion are contained in snow melting salt.

As still another example, a place at which fog or sea fog occurs for a long time may be set as a special corrosion environment because a corrosion rate is higher when equipment is wet for a longer time.

### <Processing 3: Determination of point (measurement point) for measurement by ACM sensor under condition excluding singular point>

A point to be measured by an ACM sensor is determined among points excluding a singular point within a scope of generating a corrosion rate map. In this case, for example, even if that a disposition of a plurality of measurement points is often not a uniform disposition because the plurality of measurement points excluding a singular point are disposed is taken into account, a uniform disposition may also be used. Here, any method may be used as a method of determining a measurement point.

As an example, in the case of a circular area with a radius of about 10 [km], the data logger 1041 and the ACM sensor 11 may be installed at a point of one place, and the ACM sensor 11 (without the data logger) may be installed at points of four places.

As another example, in the case of a circular area with a radius of about 20 [km], the data logger 1041 and the ACM sensor 11 may be installed at points of five places, and the ACM sensor 11 (without the data logger) may be installed at points of 16 places.

### <Processing 4: Measurement of corrosion rate at singular point>

A corrosion rate of a metal material at a singular point is measured. As this measurement method, a method of performing measurement using the ACM sensor 11 may be used as an example, but a method of performing measurement using an exposure test piece may also be used as another example.

For example, since the corrosiveness of the special corrosive environment is severe, in the ACM sensor which is a self-consumption sensor that draws a current while being corroded itself, a replacement cycle may be shortened, and a burden of replacement work may be increased.

On the other hand, in the case of measurement (measurement by an exposure test) using an exposure test piece, in a normal general environment (an environment that is not a special corrosive environment), it is necessary to continuously perform measurement for 3 to 5 years, and for 10 years in some cases. However, since the corrosiveness of the special corrosive environment is severe, it is considered possible to estimate a corrosion rate if the exposure test is performed over about one year in the special corrosive environment.

As described above, at a singular point (a point of the special corrosive environment), as a preferable example, evaluation of a corrosion rate is performed by installing an exposure test piece for one year (or that level), and then taking back the exposure test piece. As the method of evaluating a corrosion rate, any method may be used, and, for example, a method of calculating an amount of decrease in weight on the basis of a measurement result of weight at the beginning (before exposure) and a measurement result of weight after exposure and after rusting, and evaluating a corrosion rate on the basis of a result of the calculation may also be used.

### <Processing 5: Generation of corrosion rate map>

Map information (corrosion rate map) which represents a distribution of a corrosion rate is generated on the basis of data regarding a corrosion rate obtained by setting a point of a general corrosive environment (also referred to as a "general point" for convenience of description) which is a point other than a singular point as a measurement point and data regarding a corrosion rate obtained by setting a singular point as a measurement point. In this case, for example, when the singular point is considered, accuracy of a corrosion rate map is improved as compared to when the singular point is not considered.

Here, for example, in principle, a corrosion rate map is generated by a multiple regression analysis using corrosion rate data of a general point, a weather factor, and a topography factor. In this manner, when a corrosion rate map is generated on the basis of the corrosion rate data of a general point, as a method of estimating a corrosion rate at a point (non-measurement point) other than a measurement point, any method may also be used. As an example, the method described in Patent Literature 1 may be used.

As another example, as the method of estimating a corrosion rate at a non-measurement point, a method of interpolating a value of a corrosion rate at a non-measurement point using a value of corrosion rate data at measurement points may be used. As this interpolation method, a method of using an average value (for example, an average value based on a spatial position) or a weighted average value at a non-measurement point for values of corrosion rate data of a plurality of measurement points may be used, or a method of using a value of corrosion rate data of a measurement point which is the closest distance to a non-measurement point (as it is), and the like may also be used.

As an example, with respect to position data (for example, data of latitude and longitude) of a singular point, the same position data in a corrosion rate map estimated from the corrosion rate data of a general point is detected. Then, corrosion rate data (corrosion rate data of the singular point) in the position data of the singular point is compared with corrosion rate data (corrosion rate data estimated from a general point) in the same position data in the corrosion rate map estimated from the corrosion rate data of the general point, and, when it is determined that a corrosion rate of the singular point is higher than a corrosion rate estimated from the general point, the corrosion rate map is rewritten to adopt the corrosion rate data of the singular point for the position data. On the contrary, when it is determined that the corrosion rate of the singular point is lower than the corrosion rate estimated from the general point, for example, for the position data, the corrosion rate data estimated from the general point may be adopted, or the corrosion rate map may be rewritten to adopt the corrosion rate data of the singular point.

Here, when the corrosion rate data of the singular point is reflected in the corrosion rate map based on the corrosion rate data estimated form the general point, it is conceivable that each point of a single place, which is a singular point, becomes smaller on the map (the corrosion rate map), and a situation in which it is difficult for a person to visually confirm may occur. Such a situation may also depend on a resolution of the map (the corrosion rate map), or the like. As such a situation, for example, when the corrosion rate map is displayed on a screen and the like, a situation in which a point of one place (a singular point of one place) becomes a small point such as one dot to several dots is conceivable.

In such a case, for example, a configuration in which information on singular points is individually managed may be used. As an example, a table (for example, list data) in which position data and corrosion rate data of all measurement points (general points and singular points) are associated with each other may be stored in a storage unit, and a correspondence between position data and corrosion rate data of each singular point may be supplementarily added to the table to be easily understood.

In addition, when the corrosion rate data of a singular point is not reflected in the corrosion rate map based on the corrosion rate data estimated from the general point, or the like, for example, a configuration in which the information on singular points is individually managed may be used.

As an example, a table (for example, list data) in which position data and corrosion rate data of all measurement points (general points) are associated with each other may be stored in a storage unit, and a correspondence between position data and corrosion rate data of each singular point may be supplementarily added to the table to be easily understood.

As another example, a configuration in which a table in which position data and corrosion rate data of a singular point (only) are associated with each other may be stored in a storage unit, and the table is individually managed may be used. In this configuration, for example, a table in which position data and corrosion rate data of a general point (only) are associated with each other and a table in which position data and corrosion rate data of a singular point (only) are associated with each other may be provided as separate tables.

Note that the number of singular points is assumed to be usually smaller than the number of general points.

### <Processing for estimating corrosion rate data at non-measurement point from corrosion rate data at measurement point>

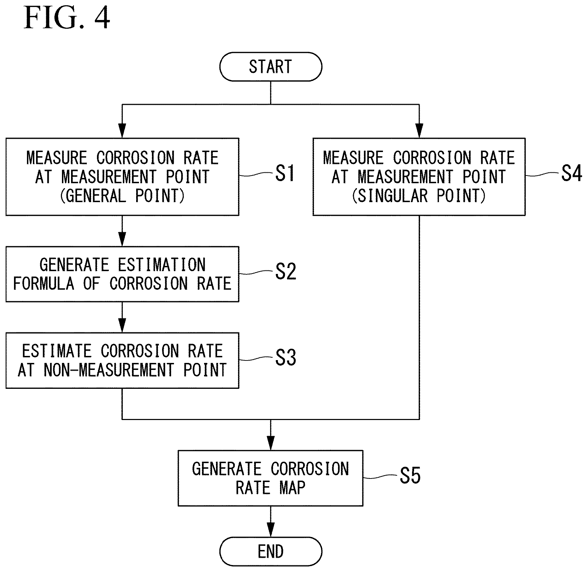

FIG 4 is a diagram which shows an example of a flow of processing for estimating corrosion rate data at a non-measurement point from corrosion rate data at a measurement point. In addition, a procedure of processing shown in FIG 4 is an example, and any other processing and its order may also be used.

### (Step S 1)

Measurement of a corrosion rate at a measurement point of a general point is performed.

### (Step S2)

An estimation formula of a corrosion rate which also extends to an area of a point (non-measurement point) other than a measurement point is generated on the basis of a result of measuring a corrosion rate at the measurement point of a general point.

### (Step S3)

A corrosion rate at a non-measurement point is estimated on the basis of the generated estimation formula of corrosion rate.

### (Step S4)

A corrosion rate at a measurement point of a singular point is estimated.

Here, the measurement at a measurement point of a general point in step S 1 and the measurement at a measurement point of a singular point in step S4 may be performed in the same period of time (the same start timing and the same end timing), may be performed in substantially the same period of time, or may be performed in different periods of time. For example, when a measurement result at the measurement point of a general point and a measurement result at the measurement point of a specific point are combined, it is preferable that these results be related to each other (that is, a measurement status and the like are related).

### (Step S5)

A corrosion rate map is generated by combining a measurement result at the measurement point of a general point, an estimation result at the non-measurement point, and a measurement result at the measurement point of a specific point.

### <Processing for estimating corrosion rate in accordance with measurement result of evaluation ACM sensor from measurement result of reference ACM sensor>

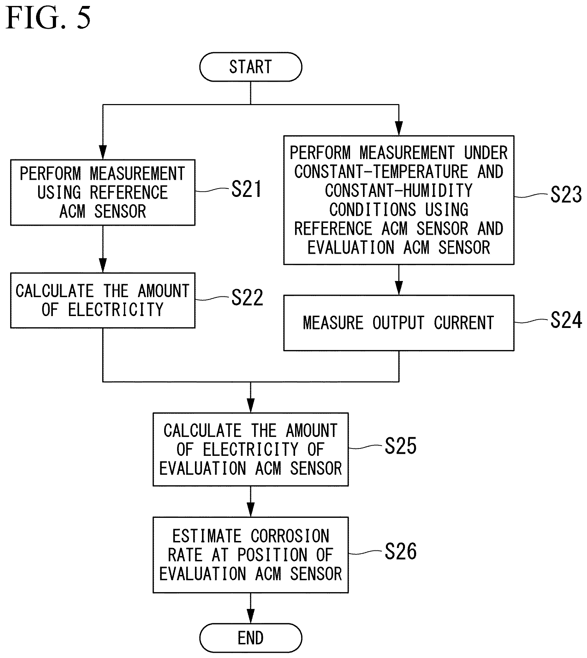

FIG 5 is a diagram which shows an example of a flow of processing for estimating a corrosion rate in accordance with a measurement result of an evaluation ACM sensor from a measurement result of a reference ACM sensor.

Note that a case of using the method described in Patent Literature 2 is shown in the example of FIG 5, but any other method may also be used.

In addition, a procedure of the processing shown in FIG. 5 is an example, and any other processing and its order may also be used.

Moreover, for example, any one of the processing as shown in FIG 4 and the processing as shown in FIG 5 may be used, or both may be combined and used.

Here, a reference ACM sensor is the ACM sensor 11 which is provided together with the data logger 1041, and data of a measurement result of the reference ACM sensor is stored in the data logger 1041.

In addition, an evaluation ACM sensor is an ACM sensor 11 which is not provided together with a data logger, and data of a measurement result of the evaluation ACM sensor is not stored in a data logger.

### (Step S21)

The reference ACM sensor performs measurement.

### (Step S22)

The amount of electricity is calculated on the basis of a result of the measurement in step S21.

### (Step S23)

The reference ACM sensor and the evaluation ACM sensor perform measurement under constant-temperature and constant-humidity conditions.

### (Step S24)

An output current is calculated on the basis of a result of the measurement in step S23.

Here, with respect to, for example, the processing of steps S21 and S22, the processing of steps S23 and S24 may be performed in advance, may be performed thereafter, or may be performed at another timing.

### (Step S25)

The amount of electricity of the evaluation ACM sensor is calculated on the basis of a result of the calculation in step S22 and a result of the calculation in step S24.

### (Step S26)

A corrosion rate at a position (measurement point) of the evaluation ACM sensor is estimated on the basis of a result of the calculation in step S25.

Here, various types of evaluation may be performed as evaluation based on a result of the measurement by the ACM sensor 11. As such evaluation, for example, evaluation for a corrosion rate in a predetermined period (for example, a predetermined number of months, a predetermined number of years, or the like) may be performed at a plurality of measurement points and non-measurement points. In addition, a type, concentration, or the like of an attachment object to the ACM sensor 11 may be measured to evaluate a corrosion factor.

In addition, for example, a map (corrosion rate map) in which information indicating values of corrosion rate is described at positions corresponding to the plurality of measurement points and non-measurement points may be generated. As the information, for example, numerical values may be used, or colors, patterns, or the like may also be used.

Moreover, for example, a table in which information such as a corrosion rate is listed for each measurement target (for example, steel tower) may be generated.

### [Technologies that can be used in the embodiment]

Technical contents disclosed in Japanese Patent No. 5066955 (Patent Literature corresponding to Patent Literature 1) are shown. Some or all of the technical contents may be used in the present embodiment.

As an example, there is a corrosion rate evaluation method which, in performing a multiple regression analysis having a corrosion rate of a metal material as an objective variable and an environmental factor and a topography factor that affect the corrosion rate as explanatory variables, includes at least one virtual wetting time weighted according to a relative humidity of 0% to 100% as one of explanatory variables, in which this virtual wetting time is obtained by calculating a sum of multiplication values obtained by multiplying a time corresponding to a changing relative humidity by a weighting factor varying with the changing relative humidity, obtains a corrosion rate estimation formula using a multiple regression analysis method based on a measured corrosion rate of a metal material, and obtains a corrosion rate of the metal material in a non-measurement area by estimating it on the basis of an obtained corrosion rate estimation formula, in which weighting of the virtual wetting time is performed by considering at least one of the amount of an attachment object to a metal material of a corresponding target area, a type of an attachment object, an environmental condition, a weather condition, and a terrain condition for each target area to estimate the corrosion rate.

As another example, in the corrosion rate evaluation method, the weighting of the virtual wetting time is performed on the basis of a corrosion rate of a metal material detected by the ACM sensor, a corrosion rate of a metal material obtained by an exposure test, or a corrosion rate obtained from a corrosion status of a metal material that constitutes an actual member.

As still another example, in the corrosion rate evaluation method, a corrosion rate map of a metal material in a wide range of regions is created on the basis of the estimated and obtained corrosion rate of the metal material.

Technical contents disclosed in Japanese Patent No. 4724649 (Patent Literature corresponding to Patent Literature 2) are shown. Some or all of the technical contents may be used in the present embodiment.

As an example, there is a method of estimating a corrosion rate of a structure using an ACM sensor which has a process (1) of connecting a data logger to a surface area of a real structure such that time-lapse data of an output current can be measured, obtaining the amount of electricity on the basis of the time-lapse output current data of a reference ACM sensor installed for a fixed period of time, and installing an evaluation ACM sensor in a different surface area of the real structure for a fixed period of time in a state in which the anode and the cathode are conducted instead of connecting a data logger, a process (2) of placing the evaluation ACM sensor together with the reference ACM sensor under constant-temperature and constant-humidity conditions, and measuring each output current, a process (3) of obtaining the amount of electricity of the evaluation ACM sensor on the basis of a relationship between the output current of the reference ACM sensor and the output current of the evaluation ACM sensor in the process (2), and the amount of electricity of the reference ACM sensor, and a process (4) of obtaining an estimated corrosion rate of the real structure on the basis of the amount of electricity of the evaluation ACM sensor obtained in the process (3), and a relationship between the amount of electricity and a corrosion rate set in advance.

As another example, in the method of estimating a corrosion rate of a structure using an ACM sensor, a process (2-2) of analyzing an attachment object on the surface of the evaluation ACM sensor and obtaining an analyzed current value, and a process (2-3) of correcting an measured output current value of the evaluation ACM sensor based on a correlation between the measured output current value of the evaluation ACM sensor under the constant-temperature and constant-humidity conditions and the analyzed current value.

As still another example, an analysis of an attachment object analyzes a type and an amount of attached ions in the method of estimating a corrosion rate of a structure using an ACM sensor.

As still another example, in the method of estimating a corrosion rate of a structure using an ACM sensor, the evaluation ACM sensor is divided into a group with a large amount of chlorine ions and the other group in advance on the basis of analyzed data of the attachment object, and an analyzed current value for each group is obtained.

As still another example, in the method of estimating a corrosion rate of a structure using an ACM sensor, the group division is performed when an abnormal value is recognized as a measured current value measured in the process (2).

As still another example, in the method of estimating a corrosion rate of a structure using an ACM sensor, a material constituting the structure is steel, zinc, or aluminum.

As still another example, in the method of estimating a corrosion rate of a structure using an ACM sensor, the amount of electricity is the integrated amount of electricity (C) or the daily average amount of electricity (C/day).

In the estimation of information on corrosion in a place in which a measurement result on corrosion is not obtained on the basis of a measurement result on corrosion, it is possible to improve accuracy of a map regarding corrosion by separately measuring the general point and the singular point.

As described above, estimation of information on corrosion of a metal material at a point (non-measurement point) on which such measurement is not performed on the basis of data obtained by performing measurement on the corrosion of a metal material, it is possible to perform evaluation (for example, evaluation and the like of a corrosion rate) regarding corrosion with high accuracy even when the non-measurement point has a special corrosive environment.

In addition, in the method of evaluating corrosion for example, when information on a wide range of corrosion is estimated, significant reduction in labor cost and material cost can be achieved.

Here, a configuration in which a corrosion rate of a metal material is measured using an ACM sensor at a measurement point of a general point is shown in the present embodiment, and a configuration in which the corrosion rate of a metal material is obtained in an exposure test, a configuration in which the corrosion status of a metal material is obtained based on the corrosion rate of an actual metal material, or the like may be used as another configuration example. Moreover, in the same manner, any method may be used as a method of measuring the corrosion rate of a metal material even at a measurement point of the singular point.

Note that the present embodiment may be applied to, for example, fields other than power equipment.

### <Configuration example>

As one configuration example, a method of evaluating corrosion in which evaluation for corrosion is performed on the basis of a result of measurement performed on the corrosion of a metal material (for example, a component such as a steel tower) using a detector (for example, an ACM sensor 11 or an exposure test piece) includes acquiring a first measurement result performed by a first detector installed at a first measurement point (for example, a measurement point of a general point), acquiring a second measurement result performed by a second detector installed at a second measurement point (for example, a measurement point that is a singular point) that is different from the first measurement point, and acquiring an estimation result (for example, estimation information corresponding to a measurement result of a detector) in which information on a measurement result at an estimation point (a point to be estimated) that is different from the first measurement point and the second measurement point is estimated on the basis of the first measurement result.

As one configuration example, in the method of evaluating corrosion, the evaluation for corrosion is performed on an area including the first measurement point, the second measurement point, and the estimation point on the basis of the first measurement result, the second measurement result, and the estimation result.

As one configuration example, in the method of evaluating corrosion, a map (for example, map of a corrosion rate or the like) regarding the corrosion of the area including the first measurement point, the second measurement point, and the estimation point is generated on the basis of the first measurement result, the second measurement result, and the estimation result.

As one configuration example, in the method of evaluating corrosion, evaluation for a corrosion rate is performed as the evaluation for corrosion.

As one configuration example, in the method of evaluating corrosion, a plurality of the detectors are disposed (for example, an example of FIG 3).

As one configuration example, in the method of evaluating corrosion, a plurality of the detectors are disposed outside and inside of a steel tower (for example, the example of FIG 3).

As one configuration example, in the method of evaluating corrosion, the detector is an ACM sensor, and the ACM sensor using aluminum, the ACM sensor using zinc, and the ACM sensor using iron are disposed in this order from the top to the bottom (for example, the example of FIG 3).

As one configuration example, in the method of evaluating corrosion, the detector is an ACM sensor or an exposure test piece.

As one configuration example, in the method of evaluating corrosion, the second measurement point is set to a region having a special corrosive environment different from corrosiveness at the first measurement point. Note that the first measurement point is set to a region having a normal general corrosive environment.

As one configuration example, in the method of evaluating corrosion, the number of second measurement points is smaller than the number of first measurement points.

A configuration in which a part or all of processing in the method of evaluating corrosion is executed by a device (corrosion evaluation device) including a computer and the like may be used. The corrosion evaluation device may include, for example, a function of executing processing in accordance with an operation performed by a person (user), include, for example, a function of executing processing on the basis of information (for example, a program or a parameter) set in advance, or include both of these functions in combination.

A program for realizing the function of a device (for example, a corrosion evaluation device) is recorded in a computer-readable recording medium, and a computer system is caused to read and execute the program recorded in this recording medium, and thereby processing may be performed. Note that "computer system" mentioned herein may include hardware such as an operating system (OS) or hardware such as peripheral devices. In addition, "computer-readable recording medium" refers to a portable media such as a flexible disk, a magneto-optical disc, a read only memory (ROM), a writable non-volatile memory such as a flash memory, or a digital versatile disk (DVD), and a storage device such as a hard disk built in a computer system. Furthermore, the "computer-readable recording medium" includes a volatile memory (for example, a dynamic random access memory (DRAM)) inside a computer system made of a server or a client when a program is transmitted via a network such as the Internet or a communication line such as a telephone line, which holds a program for a fixed period of time.

In addition, the program may be transmitted from a computer system in which this program is stored in a storage device or the like to another computer system via a transmission medium or a transmission wave in the transmission medium. Here, "transmission medium" for transmitting a program refers to a medium having a function of transmitting information, such as a network (communication network) such as the Internet or a communication line such as a telephone line.

Moreover, the program described above may be a program for realizing a part of the function described above. Furthermore, the program may be a so-called difference file (difference program) which can be realized by being combined with a program already recorded on a computer system.

### [Reference Signs List]

11, 1031 to 1033, 1071 to 1073 ACM Sensor
21 Steel substrate
22, 22a, 22b Conductive member
23, 23a, 23b Insulating member
31 and 32 Connecting place
41 and 42 Conductor
51 Current measuring instrument
1021 Steel tower
1051, 1053, 1055, 1061, 1063, 1065, 1081, 1083, 1085, 1091, 1093, 1095 Cable
1052, 1054, 1056, 1062, 1064, 1066, 1082, 1084, 1086, 1092, 1094, 1096 Connector

## Claims

1. A method of evaluating corrosion in which evaluation for corrosion is performed on the basis of a result of measurement performed on the corrosion of a metal material, comprising:
acquiring (S 1) a first measurement result performed by a plurality of first detectors (1031-1033, 1071-1073), each of the first detectors (1031-1033, 1071-1073) being installed at a respective measuring point of a plurality of first measurement points;
acquiring (S4) second measurement results performed by one or more second detectors (1031-1033, 1071-1073), each of the second detectors (1031-1033, 1071-1073) being installed at a respective measuring point of one or more second measurement points that are different from the first measurement points;
acquiring (S3) an estimation result in which information on a measurement result at an estimation point that is different from the first measurement points and the one or more second measurement points is estimated; and
performing the evaluation for corrosion on an area including the first measurement points, the second measurement points, and the estimation point on the basis of the first measurement result, the second measurement results, and the estimation result,
**characterized in that**
the evaluation for corrosion is performed on the basis of the result of measurement performed on the corrosion of the metal material using the plurality of first detectors (1031-1033, 1071-1073) and the one or more second detectors (1031-1033, 1071-1073), the plurality of first detectors (1031-1033, 1071-1073) being used to estimate information on the measurement result at the estimation point, and the one or more second detectors (1031-1033, 1071-1073) not being used to estimate the information on the measurement result at the estimation point,
wherein each of the one or more second measurement points is a point on a region having a special corrosiveness in the area, the region being any one of a vicinity of a river, a river crossing place, an industrial waste disposal site, or a vicinity of an incinerator, a place at which snow melting salt has been scattered on a main road, a place at which fog or sea fog occurs for a long time.

2. The method of evaluating corrosion according to claim 1, wherein the step of performing the evaluation for corrosion comprises:
generating (S5) a map regarding the corrosion of an area including the first measurement points, the one or more second measurement points, and the estimation point on the basis of the first measurement result, the second measurement results, and the estimation result.

3. The method of evaluating corrosion according to any one of claims 1 and 2,
wherein evaluation for a corrosion rate is performed as the evaluation for corrosion.

4. The method of evaluating corrosion according to any one of claims 1 to 3,
wherein the plurality of the first detectors (1031-1033, 1071-1073) is disposed outside and inside of a steel tower (1021).

5. The method of evaluating corrosion according to claim 4,
wherein each of the plurality of first detectors (1031-1033, 1071-1073) is an atmospheric corrosion monitor, ACM, sensor, and
the ACM sensor using aluminum, the ACM sensor using zinc, and the ACM sensor using iron are disposed in this order from the top to the bottom of the steel tower (1021).

6. The method of evaluating corrosion according to any one of claims 1 to 4,
wherein each of the plurality of first detectors (1031-1033, 1071-1073) is an atmospheric corrosion monitor, ACM, sensor or an exposure test piece, and each of the one or more second detectors (1031-1033, 1071-1073) is an ACM sensor or an exposure test piece.

7. The method of evaluating corrosion according to any one of claims 1 to 6,
wherein the number of the one or more second measurement points is smaller than the number of the first measurement points.

## Patentansprüche

1. Verfahren zur Korrosionsbeurteilung, bei dem die Beurteilung auf Korrosion basierend auf einem Ergebnis einer Messung durchgeführt wird, die an der Korrosion eines Metallmaterials durchgeführt wurde, umfassend:
Erfassen (S1) eines ersten Messergebnisses, durchgeführt von einer Mehrzahl von ersten Detektoren (1031-1033, 1071-1073), wobei jeder der ersten Detektoren (1031-1033, 1071-1073) an einem jeweiligen Messpunkt einer Mehrzahl von ersten Messpunkten installiert ist;
Erfassen (S4) von zweiten Messergebnissen, durchgeführt von einem oder mehreren zweiten Detektoren (1031-1033, 1071-1073), wobei jeder der zweiten Detektoren (1031-1033, 1071-1073) an einem jeweiligen Messpunkt einer oder mehrerer zweiter Messpunkte, die sich von den ersten Messpunkten unterscheiden, installiert ist;
Erfassen (S3) eines Schätzergebnisses, in dem Informationen zu einem Messergebnis an einem Schätzpunkt, der sich von den ersten Messpunkten und dem einem oder den mehreren zweiten Messpunkten unterscheidet, geschätzt werden; und
Durchführen der Korrosionsbeurteilung in einem Bereich, der die ersten Messpunkte, die zweiten Messpunkte und den Schätzpunkt umfasst, basierend auf dem ersten Messergebnis, den zweiten Messergebnisse und dem Schätzergebnis, **dadurch gekennzeichnet, dass**
die Korrosionsbeurteilung basierend auf dem Ergebnis einer Messung durchgeführt wird, die unter Verwendung der Mehrzahl von ersten Detektoren (1031-1033, 1071-1073) und des einen oder der mehreren zweiten Detektoren (1031-1033, 1071-1073) an der Korrosion des Metallmaterials durchgeführt wird, wobei die Mehrzahl von ersten Detektoren (1031-1033, 1071-1073) verwendet werden, um Informationen über das Messergebnis an dem Schätzpunkt zu schätzen, und der eine oder die mehreren zweiten Detektoren (1031-1033, 1071-1073) nicht verwendet werden, um die Informationen über das Messergebnis an dem Schätzpunkt zu schätzen,
wobei jeder der einen oder mehreren zweiten Messpunkte ein Punkt in einer Region mit besonderer Korrosionsneigung ist, wobei die Region in der Nähe eines Flusses, einer Flussübergangsstelle, einer Industriemülldeponie oder einer Verbrennungsanlage, an einer Stelle, an der auf einer Hauptstraße Schneeschmelzsalz verstreut wurde, oder an einer Stelle, an der über längere Zeit Nebel oder Seenebel auftritt, liegt.

2. Verfahren zur Korrosionsbeurteilung nach Anspruch 1, wobei der Schritt der Durchführung der Korrosionsbeurteilung umfasst:
Erstellen (S5) einer Karte, bezüglich der Korrosion, einer Region, die die ersten Messpunkte, den einen oder die mehrere zweiten Messpunkte und den Schätzpunkt umfasst, basierend auf dem ersten Messergebnis, dem zweiten Messergebnis und dem Schätzergebnis.

3. Verfahren zur Korrosionsbeurteilung nach einem der Ansprüche 1 und 2, wobei die Beurteilung einer Korrosionsrate als Beurteilung der Korrosion durchgeführt wird.

4. Verfahren zur Korrosionsbeurteilung nach einem der Ansprüche 1 bis 3, wobei die Mehrzahl der ersten Detektoren (1031-1033, 1071-1073) außerhalb und innerhalb eines Stahlturms (1021) angeordnet ist.

5. Verfahren zur Korrosionsbeurteilung nach Anspruch 4,
wobei jeder der Mehrzahl von ersten Detektoren (1031-1033, 1071-1073) ein atmosphärischer Korrosionsüberwachungs-, ACM, Sensor, ist, und
der ACM-Sensor, der Aluminium verwendet, der ACM-Sensor, der Zink verwendet, und der ACM-Sensor, der Eisen verwendet, in dieser Reihenfolge von oben nach unten im Stahlturm (1021) angeordnet sind.

6. Verfahren zur Korrosionsbeurteilung nach einem der Ansprüche 1 bis 4,
wobei jeder der Mehrzahl der ersten Detektoren (1031-1033, 1071-1073) ein atmosphärischer Korrosionsüberwachungs-, ACM, Sensor oder ein Expositionstestteil ist, und wobei jeder der einen oder mehreren zweiten Detektoren (1031-1033, 1071-1073) ein ACM-Sensor oder ein Expositionstestteil ist.

7. Verfahren zur Korrosionsbeurteilung nach einem der Ansprüche 1 bis 6,
wobei die Anzahl der einen oder mehreren zweiten Messpunkte kleiner als die Anzahl der ersten Messpunkte ist.

## Revendications

1. Procédé d'évaluation de la corrosion selon lequel l'évaluation de la corrosion est réalisée sur la base d'un résultat de mesure d'une mesure réalisée en ce qui concerne la corrosion d'un matériau de métal, comprenant :
l'acquisition (S1) d'un premier résultat de mesure réalisée par une pluralité de premiers détecteurs (1031-1033, 1071-1073), chacun des premiers détecteurs (1031-1033, 1071-1073) étant installé au niveau d'un point de mesure respectif d'une pluralité de premiers points de mesure ;
l'acquisition (S4) de seconds résultats de mesure réalisées par un ou plusieurs seconds détecteurs (1031-1033, 1071-1073), chacun des seconds détecteurs (1031-1033, 1071-1073) étant installé au niveau d'un point de mesure respectif d'un ou de plusieurs seconds points de mesure qui sont différents des premiers points de mesure
l'acquisition (S3) d'un résultat d'estimation selon lequel une information concernant un résultat de mesure au niveau d'un point d'estimation qui est différent des premiers points de mesure et des un ou plusieurs seconds points de mesure est estimée ; et
la réalisation de l'évaluation de la corrosion en ce qui concerne une zone incluant les premiers points de mesure, les seconds points de mesure et le point d'estimation sur la base du premier résultat de mesure, des seconds résultats de mesure et du résultat d'estimation,
**caractérisé en ce que** :
l'évaluation de la corrosion est réalisée sur la base du résultat de mesure réalisée en ce qui concerne la corrosion du matériau de métal en utilisant la pluralité de premiers détecteurs (1031-1033, 1071-1073) et les un ou plusieurs seconds détecteurs (1031-1033, 1071-1073), la pluralité de premiers détecteurs (1031-1033, 1071-1073) étant utilisée pour estimer une information concernant le résultat de mesure au niveau du point d'estimation, et les un ou plusieurs seconds détecteurs (1031-1033, 1071-1073) n'étant pas utilisés pour estimer l'information concernant le résultat de mesure au niveau du point d'estimation,
dans lequel chacun des un ou plusieurs seconds points de mesure est un point au niveau d'une région présentant une corrosivité particulière dans la zone, la région étant une quelconque région parmi un voisinage d'une rivière, un lieu de passage d'une rivière, un site d'élimination de déchets industriels ou un voisinage d'un incinérateur, un endroit au niveau duquel du sel faisant fondre la neige a été répandu sur une route principale, un endroit au niveau duquel du brouillard ou du brouillard marin est observé sur un temps long.

2. Procédé d'évaluation de la corrosion selon la revendication 1, dans lequel l'étape de réalisation de l'évaluation de la corrosion comprend :
la génération (S5) d'une carte relative à la corrosion d'une zone incluant les premiers points de mesure, les un ou plusieurs seconds points de mesure et le point d'estimation sur la base du premier résultat de mesure, des seconds résultats de mesure et du résultat d'estimation.

3. Procédé d'évaluation de la corrosion selon l'une quelconque des revendications 1 et 2,
dans lequel l'évaluation d'un taux de corrosion est réalisée en tant qu'évaluation de la corrosion.

4. Procédé d'évaluation de la corrosion selon l'une quelconque des revendications 1 à 3,
dans lequel la pluralité des premiers détecteurs (1031-1033, 1071-1073) est disposée à l'extérieur et à l'intérieur d'une tour en acier (1021).

5. Procédé d'évaluation de la corrosion selon la revendication 4,
dans lequel chacun de la pluralité de premiers détecteurs (1031-1033, 1071-1073) est un capteur de dispositif de surveillance ou de moniteur de corrosion atmosphérique, ACM, et
le capteur ACM utilisant de l'aluminium, le capteur ACM utilisant du zinc et le capteur ACM utilisant du fer sont disposés selon cet ordre depuis le sommet jusqu'à la base de la tour en acier (1021).

6. Procédé d'évaluation de la corrosion selon l'une quelconque des revendications 1 à 4,
dans lequel chacun de la pluralité de premiers détecteurs (1031-1033, 1071-1073) est un capteur de dispositif de surveillance ou de moniteur de corrosion atmosphérique, ACM, ou un échantillon d'exposition, et chacun des un ou plusieurs seconds détecteurs (1031-1033, 1071-1073) est un capteur ACM ou un échantillon d'exposition.

7. Procédé d'évaluation de la corrosion selon l'une quelconque des revendications 1 à 6,
dans lequel le nombre des un ou plusieurs seconds points de mesure est inférieur au nombre des premiers points de mesure.
